# EUROPEAN PATENT APPLICATION

(11) **EP 2 023 232 A1**
(43) Date of publication of application: **11.02.2009**
(21) Application number: 07253057.9
(22) Date of filing: 03.08.2007
(51) Int. Cl.: G06F 3/02

(54) **Energy saving device**

(71) Applicant: Brite Ideas Global Limited, Loughborough Leicestershire LE11 5RF (GB)
(72) Inventor: The designation of the inventor has not yet been filed
(74) Representative: Foot, Paul Matthew James

(57) **Abstract**

A dedicated computer power saving device for a computer, the computer configured to enter one of at least two software controlled standby states, the device comprising a connection for connecting the device to the computer, and a dedicated user input configured to provide an input command to the computer upon operation, the input command configured to instruct the running of a program accessible by the computer, which program sets a default standby state of the computer to a desired standby state at least when the default standby state is different to the desired standby state, and issues a command to the computer to enter the default standby state.

## Description

The present invention is concerned with reducing energy consumption of programmable electronic devices, and more specifically with reducing energy consumption in computers.

Typically, computers such as PCs consume in the order of 150 - 200W (Watts) when in use, and in the order of 5W when switched off, but still plugged in. Modem computer systems have operating systems (OS) which are capable of putting the computer into a state in which the power consumption is reduced. For example, they may deactivate certain peripherals such as the display, or hard drive. These peripherals are generally not required when a user is not operating the computer.

A known power management standard is the ACPI (Advanced Configuration and Power Interface) standard. Most motherboards of IBM compatible PCs produced in recent years adhere to this standard. The ACPI standard has a number of global states into which the OS can place the computer. These are:
G0 - in which the computer is fully operable. The power state of devices may be changed dynamically.
G1 - this state is split into four sub-states, or sleep states; S1 to S4. The computer appears off to the user, but this is because peripherals such as the display are powered down. The system's context is preserved (i.e. active memory is stored).
G2 - (a.k.a. S5; see below) "soft off" in which the computer system is mostly deactivated with the exception of minimal power to provide awakening upon certain input. The system's context is not stored in this state.
G3 - "mechanical off" in which the computer is fully shut down, and ready to be unplugged. In the G3 state the power consumption is typically lowest, as only the system real-time clock is kept powered. The computer has to be mechanically switched on to return to any other state.

The G1 sleep states are commonly used during regular use, as they all provide a relatively short time (known as the wake latency time) to return to the G0 state. Furthermore the system's context is maintained and as such the user can continue working. The G1 sleep states are defined as follows:
S1 - Devices which do not indicate otherwise are deactivated, the CPU and main memory are powered. This state has the highest power consumption of the G1 sleep states (in the order of 150W), although the wake latency is time is shortest of the G1 sleep states.
S2 - As S1, however with the CPU powered down, and the system cache emptied. The power consumption is lower than S1, although the wake latency time is longer.
S3 - As S2, except all system context (except for the main system memory) is lost. The power consumption is lower than S2 and S1 (S3 power consumption is in the order of 5W), although the wake latency time is longer. However, to an end user the difference in the wake latency time between S1 and S3 states is negligible, and both appear "instantaneous" (i.e. wake latency times are within a few seconds). In addition, programs, windows etc are restored to their original position on-screen due to the retention of the main system memory context.
S4 - All devices are powered off, although the context is maintained by storing memory on, for example, the hard disk. This state is often called "hibernate". The power consumption is lower than S3, although the wake latency time is significantly longer, as the hard disk needs to be read from.
S5 - As G3; the system's context is simply not stored (as opposed to S4).

Computer systems can be supplied with an OS that allows an ACPI state to be entered after a certain period of inactivity. This can also be user specified. However, the user is simply given a choice of altering settings for a "sleep" state (i.e. one of S1 to S3; S4 is known as "hibernation"). Control over which G1 sleep state into which the computer passes is usually hidden from the user, within the OS.

In an OS such as Windows XP, 2000, 2003 and ME (all trademarks of the Microsoft Corporation), the default G1 sleep state into which the system passes is determined upon OS installation. This is generally determined by the hardware found by the OS. In modem systems, it is conceivable that the OS will determine that S3 is the most appropriate default G1 sleep state (having a lower power consumption that S1 and S2 and still having a relatively low wake latency time).

However, when USB peripheral devices are added to the system (e.g. mice), the computer BIOS may report to the OS that these devices are not capable of waking the system from an S3 state and as such the OS changes the default sleep state to S1 (with a higher power consumption than S3, but with higher system integrity such that a return to the G0 state is easier). Some versions of Windows XP automatically prevent entry into S3 state when USB keyboard / mouse devices are connected as the Windows registry is configured to instruct the BIOS to always return an S1 wake capability to the OS for any USB devices.

As such, the power consumption during the sleep state is significantly higher (potentially in the order of 3000 percent higher) with USB peripherals connected. This use of the S1 state instead of S3 is merely a failsafe control to prevent system crashes, and in fact many USB devices will work adequately using the S3 state. Needless use of the S1 state in place of the S3 state wastes power and incurs expense for the user and / or owner of the computer in power bills. This is especially true as most users are unaware of which state the OS has selected.

Additionally, many computer systems do not have a straightforward method of activating the G1 sleep state on demand. Activation of the sleep state is often timer controlled, which may be too long, resulting in the computer remaining in the power-hungry G0 state whilst idle, or too short, in which the sleep state may be entered when, for example, the user is reading from the display, or studying a display image. Some keyboards comprise a sleep button to engage the G1 sleep state, however if this function is required the entire keyboard must be replaced at great expense.

Needless to say, the above methods enter the default sleep mode determined by the OS, which is commonly not the most efficient state as described.

It is an object of this invention to alleviate one or more of the above problems.

A technical problem solved by claim 1 is to provide a way of setting the default computer standby state to a more efficient state, for a range of computers and default computer standby states without the need to replace existing hardware or manually modify registry settings.

According to a first aspect of the invention there is provided a computer power saving device for a computer, the computer configured to enter one of at least two software controlled standby states, the device comprising a connection for connecting the device to the computer, and a dedicated user input configured to provide an input command to the computer upon operation, the input command configured to instruct the running of a program accessible by the computer, which program sets a default standby state of the computer to a desired standby state at least when the default standby state is different to the desired standby state, and issues a command to the computer to enter the default standby state.

Preferably the computer power saving device is a dedicated computer power saving device. By "dedicated" we mean that the primary or sole purpose of the device is the function stated.

Advantageously, a dedicated user input is provided which can be connected to a computer for the sole purpose of energy saving. As such, the device can be made easily operable (negating the need to manually change complex system settings), and furthermore does not require the replacement of any other hardware (e.g. replacement of a normal keyboard with a keyboard with a sleep function) to operate.

Furthermore, modification of the default standby state ensures that the computer will enter the desired state (normally a state with lower power consumption) regardless of the peripherals attached.

According to a second aspect of the invention there is provided a computer power saving system comprising a computer, and a dedicated computer power saving device as described above.

According to a third aspect of the invention there is provided a computer power saving kit comprising a dedicated computer power saving device as described above and computer readable media configured to install the program onto the computer.

According to a fourth aspect of the invention there is provided a method of installing a computer power saving system comprising the steps of:
providing a dedicated computer power saving device as described above;
providing the program;
providing the computer;
connecting the dedicated user input device to the computer; and
installing the program onto the computer.

According to a fifth aspect of the invention there is provided a method of installing a computer power saving system comprising the steps of:
providing a computer power saving kit as described above;
providing the computer;
connecting the dedicated user input device to the computer; and
installing the program onto the computer from the computer readable media.

According to a sixth aspect of the invention there is provided a method of saving computer system power comprising the steps of:
providing a computer;
providing a program on the computer configured to
   set a default standby state of the computer to a desired standby state, issue a command to the computer to enter the default standby state;
providing a dedicated user input device configured to instruct the computer to run the program;
using the dedicated user input device to run the program.

A computer power saving system will now be described in detail with reference to the accompanying figures in which:
Figure 1 is a schematic representation of a known computer system;
Figure 2 is a schematic representation of a known standby process;
Figure 3 is a schematic representation of a computer power saving system in accordance with a first embodiment of the present invention;
Figure 4 is a schematic representation of a standby process in accordance with a first embodiment of the present invention, and
Figure 5 is a schematic representation of a standby process in accordance with a second embodiment of the present invention.

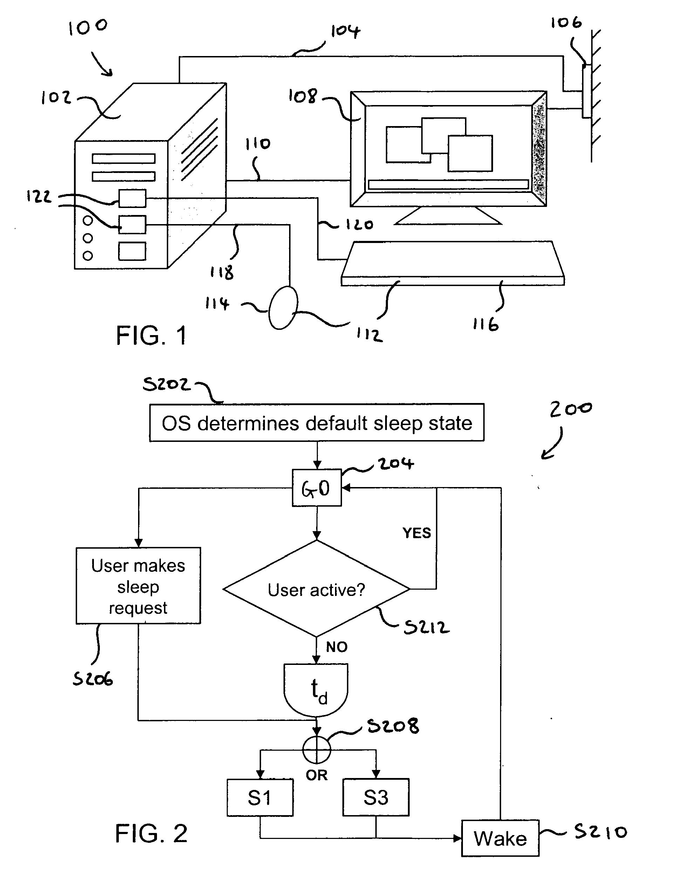

A known computer system 100 is shown in figure 1. The system comprises a computer base unit 102 containing the system memory / processors / hard drive and other known components. The base unit received power from power line 104 plugged into socket 106. An operating system (OS) such as Windows XP is installed on the computer.

The computer system 100 further comprises a display 108 such as an LCD / CRT or the like. The display receives data from the base unit 102 via display connection 110.

The computer system 100 further comprises peripheral devices 112, specifically mouse 114 and keyboard 116. The mouse 114 and keyboard 116 are connected to the base unit 102 via connections 118 and 120 respectively. In this instance, peripheral devices 112 are connected via USB (universal serial bus) connectors 122. Although this is the case, it should be noted that connections 118, 120 may not be wired, and as such may be infra-red / Bluetooth® or any known connection that functions with a USB connector.

Figure 2 shows a known sequence 200 of operation to put the computer system 100 into a G1 sleep state. Firstly, the OS determines the default G1 sleep state that the system will adopt at S202. This is in response to the hardware capabilities of the system and occurs upon installation of the OS, connection of a USB device or upon a user input changing the settings of the OS such that the USB device can "wake" the system 100.

During normal use / operation the system is in the G0 state 204 (as described above). If the user makes a sleep request using either a keyboard based sleep button, or via interaction with the OS at step S206 the system enters the default G1 sleep state at step S208 depending on the sleep state chosen at S202. In this example the available G1 sleep states are S1 and S3. However, because of the issues outlined above, the default sleep state is typically set as S1. A wake command at step S210 will restore the system to the G0 state after the wake latency time.

Alternatively, the computer will monitor for user activity (e.g. mouse motion, keyboard input) at step 212. If no user input is detected, after time td (user specified in OS settings) the system will enter the default G1 sleep state as above.

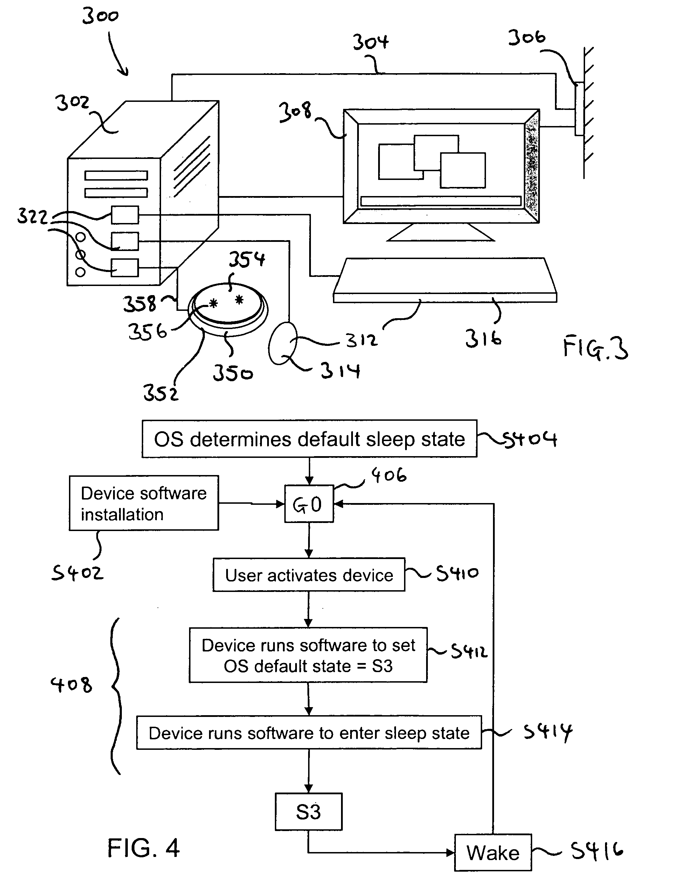

A computer power saving system 300 in accordance with the present invention is shown in figure 3. Common components are numbered 200 greater than system 100.

System 300 additionally comprises a dedicated user input device 350 comprising a base 352 and a user input button 354 mounted thereto and actuable by depression. In this example, user input button 354 has flashing lights 356 mounted thereon. The flashing lights serve as a continuous reminder to the user to operate the user input device 350 when a period of inactivity commences.

The user input device 350 is connected to base unit 302 via a connection 358 and one of the USB connectors 322. The user input device is powered via the USB connection 358 from the computer.

The user input device 350 is a keyboard emulator, and is recognised as a standard plug and play human interface device (HID) by Windows OSs from Windows 98 onwards, and as such does not require specific driver software of its own. It is capable of issuing commands in the form of a series of keystrokes to be interpreted by the OS of the system 300, as will be described below.

Figure 4 shows a schematic representation of a standby process 400 in connection with the system 300. To use system 300, the user installs software at step S402 onto the computer. The software can be downloadable, stored on a compact disc, DVD, or other appropriate media. Installation of the software may involve simply transferring an executable file onto the system hard disc (for example into the system32 folder on Windows operating systems).

Once installed, this software provides an executable file that can be initiated by a "run" command 408 in the system OS to change the default G1 state of the system to S3. This may be possible, for example in Windows XP by modifying the registry entry as follows:
HKEY_LOCAL_MACHINE\SYSTEM\CurrentControlSet\Services\usb "USBBIOSx"=DWORD:00000000

As such, the OS will not always assume a S 1 default state for all USB devices and the S3 state will be entered upon sleep. The command 408 referred will also initiate the G1 sleep state in the system.

As shown in figure 4, after the OS has determined the default G1 sleep state at step S404 (either during installation or addition of a USB device), the system is in G0 mode 406. The user then activates the user input device 350 at step S410 which emulates the keyboard input for the command 408, e.g. the input can simply be the command "run sleep" if the installed executable is named "sleep". Therefore the registry is modified at step S412 to the S3 default G1 sleep state and the sleep mode is entered at step S414. The system can then be woken by appropriate input (e.g. keystroke) at step S416.

In this manner, the user can easily enter the S3 state without manually modifying the registry (which is potentially hazardous for the system). The G1 sleep state is also entered without having to provide a sleep button on the keyboard, or interact with the OS. Furthermore, the user can rest assured that the the most desirable and / or efficient state (in this case S3) is being entered and power will not be wasted employing the S 1 state needlessly.

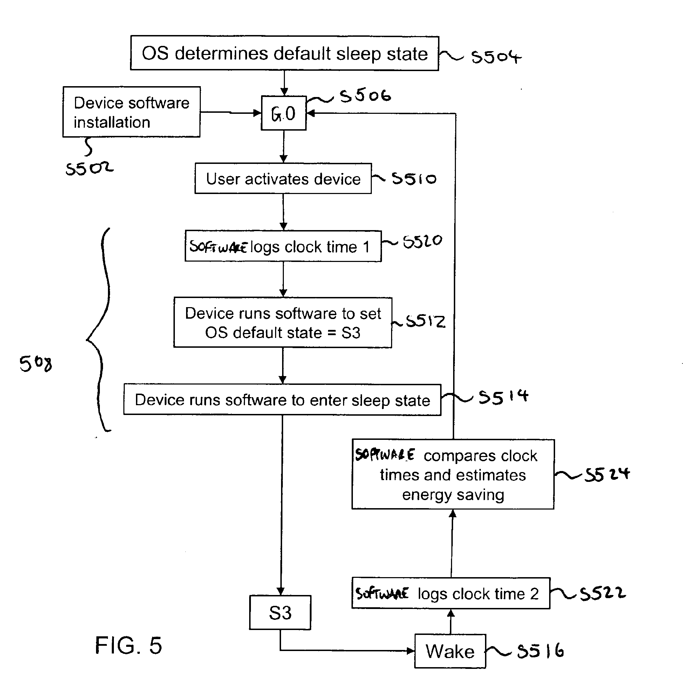

The standby process 500 of figure 5 is substantially similar to the standby process 400 of figure 4. Common features are numbered 100 greater.

In addition to process 400, process 500 includes the additional steps of recording a computer clock time1 at step S520 and clock time 2 at step S522, and comparing the clock times at step S524. These steps are carried out by the software, and by subtracting the clock time 1 from the clock time 2 the software can determine the amount of time spent in the S3 state. Additionally, this information can be displayed to the user.

Preferably, the software uses estimates of the computer system power consumption at the S1 state and S3 to approximate the energy saved by using the device. This information can then be displayed to the user, stored for future reference, or communicated to a central area or IT department to determine the total energy saving over a length of time and / or by a number of computer systems.

Upon installation, the software may determine the hardware power consumption by asking the user for the specifications of various components of the system or simply determining the specifications from the system itself.

Many variations and modifications fall within the scope of the present invention. For example, the software may be stored on flash memory inside the user input device, and may offer to automatically install via an "autorun" program when the device is connected to the computer, thus obviating the need for a separate installation disc, or download.

The user input device instead of, or in addition to flashing lights, may be shaped, decorated or coloured to provide the user with information, or simply a reminder to use it.

The executable file may additionally provide messages to the user upon entry to and /or exit from the standby state. For example, a simple message may be shown thanking the user for using the device. Additionally, an advertisement may appear, preferably including a hyperlink to a target website. The message can be configured to disappear after a few seconds to prevent disruption of use of the computer.

The device need not be connected to the system via USB, but by any means suitable for a keyboard emulator; e.g. wireless (e.g. Bluetooth®, or infra-red) connection. The computer may be a laptop or a desktop. The device may be battery powered, solar powered or mains electricity powered rather than drawing power from the USB port of the computer. This may be particularly applicable if the device is wirelessly connected to the computer.

The device may be touch sensitive rather than relying on a mechanical button press.

The device may provide the necessary input to wake the system by repeating the button press. This is possible if the device is configured to alternately issue the run command and simply provide a keyboard input (e.g. space bar) which would normally wake the computer from the standby state. Alternatively, two buttons, or other suitable inputs may be provided; one with a standby function, and the other with a wake function, each providing different inputs to the computer.

In another embodiment, the device is not dedicated, and is provided on a keyboard /mouse or the like.

The program may also run directly from the device itself.

The program may log each use and / or report each use to a central server such that an IT department can monitor use of the device.

## Claims

1. A dedicated computer power saving device for a computer, the computer configured to enter one of at least two software controlled standby states, the device comprising:
a connection for connecting the device to the computer, and
a dedicated user input configured to provide an input command to the computer upon operation, the input command configured to instruct the running of a program accessible by the computer, which program:
sets a default standby state of the computer to a desired standby state at least when the default standby state is different to the desired standby state,
and issues a command to the computer to enter the default standby state.

2. A dedicated computer power saving device according to claim 1 comprising a keyboard emulator configured to provide the input command.

3. A dedicated computer power saving device according to any preceding claim in which the connector comprises a USB link connectable to a computer.

4. A dedicated computer power saving device according to any preceding claim comprising a memory, the program being stored on the memory.

5. A dedicated computer power saving device according to any preceding claim in which the dedicated user input is configured to provide a wake input command to the computer upon operation, the wake input configured to wake the computer from the default standby state, and preferably

6. A dedicated computer power saving device according to claim 5 in which the dedicated user input comprises a first user control configured to provide the input command, and a second user control configured to provide the wake input.

7. A dedicated computer power saving device according to claim 5 in which the dedicated user input is configured to alternately provide the input command, and the wake input.

8. A computer power saving system comprising:
a computer, and
a dedicated computer power saving device according to any preceding claim.

9. A computer power saving system according to claim 8 in which the program sets the default standby state by modifying an operating system registry of the computer.

10. A computer power saving system according to claim 8 or 9 in which the desired standby state is one of ACPI global states G1 or G2, and preferably ACPI standby state S3.

11. A computer power saving kit comprising:
a dedicated computer power saving device according to any of claims 1 to 7 and;
computer readable media configured to install the program onto the computer.

12. A method of installing a computer power saving system comprising the steps of:
providing a dedicated computer power saving device according to any of claims 1 to 7;
providing the program;
providing the computer;
connecting the dedicated user input device to the computer; and
installing the program onto the computer.

13. A method of installing a computer power saving system comprising the steps of:
providing a computer power saving kit according to claim 11;
providing the computer;
connecting the dedicated user input device to the computer; and
installing the program onto the computer from the computer readable media.

14. A method of saving computer system power comprising the steps of:
providing a computer;
providing a program on the computer configured to
set a default standby state of the computer to a desired standby state,
issue a command to the computer to enter the default standby state;
providing a dedicated user input device configured to instruct the computer to run the program;
using the dedicated user input device to run the program.

15. A method of saving computer system power according to claim 12 in which the step of setting the default standby state comprises the step of modifying the OS registry.

16. A method of saving computer system power according to claim 12 or 13 in which the step of setting the default standby state comprises the step of setting the default standby state to the ACPI S3 state.
